# EUROPEAN PATENT SPECIFICATION

(11) **EP 3 079 348 B1**
(45) Date of publication and mention of the grant of the patent: **11.12.2019**
(21) Application number: 16164773.0
(22) Date of filing: 11.04.2016
(51) Int. Cl.: H04N 5/225

(54) **CAMERA FOR A MOTOR VEHICLE WITH THERMAL CONNECTING DEVICE, DRIVER ASSISTANCE SYSTEM, MOTOR VEHICLE AS WELL AS METHOD**
KAMERA FÜR EIN KRAFTFAHRZEUG MIT THERMISCHER VERBINDUNGSEINRICHTUNG, FAHRERASSISTENZSYSTEM, KRAFTFAHRZEUG SOWIE VERFAHREN
CAMÉRA POUR UN VÉHICULE AUTOMOBILE AVEC DISPOSITIF DE LIAISON THERMIQUE, SYSTÈME D'ASSISTANCE AU CONDUCTEUR, VÉHICULE AUTOMOBILE AINSI QUE PROCÉDÉ

(30) Priority: 10.04.2015 DE 102015105528
(43) Date of publication of application: 12.10.2016
(73) Proprietor: Connaught Electronics Ltd., Tuam, County Galway (IE)
(72) Inventor: GORMAN, Christopher, Tuam, County Galway (IE)
(74) Representative: Jauregui Urbahn, Kristian

(56) References cited:
- EP-A1- 0 746 192
- WO-A2-2004/047421
- US-A1- 2009 315 992
- US-A1- 2013 070 102
- US-A1- 2013 093 947
- US-A1- 2014 009 619
- US-A1- 2014 168 507

## Description

The present invention relates to a camera for a motor vehicle including a housing, including at least one electronic component disposed in the housing and generating heat during operation of the camera and transferring it to the housing, and including a lens device retained on the housing. In addition, the invention relates to a driver assistance system with at least one such camera. In addition, the present invention relates to a motor vehicle with a driver assistance system. Finally, the present invention relates to a method for operating a camera for a motor vehicle.

Presently, the interest is in particular directed to cameras for motor vehicles. Such cameras can for example be a part of a driver assistance system, by which the environmental region of the motor vehicle can be captured. The environmental region of the motor vehicle captured by the cameras can be presented to the driver of the motor vehicle for example on a corresponding display device. Such cameras include at least one electronic component, which is disposed in a housing of the camera. In the operation of the camera, this electronic component thermally generates energy or heat transferred to the housing of the camera. Therein, it is usually provided that the housing of the camera is connected to a heat sink of the motor vehicle to dissipate the heat generated in the operation from the camera.

Usually, the cameras are disposed on the motor vehicle such that they are exposed to the environmental conditions or the ambient impacts. In particular at cold temperatures, in particular at temperatures below the freezing point, this can result in ice attaching to the lens of the camera. This can entail that the functionality of the camera is restricted or does no longer exist. For solving this problem, cameras are known from the prior art, which have a corresponding heating element, by which the lens can be heated and thus the formation of ice on the lens can be prevented. However, such a heating element entails additional cost and increased manufacturing effort. Further, a corresponding control circuit is required, by which the ambient temperature can be acquired and the heating element can be controlled depending on the ambient temperature.

WO2004047421 discloses an imaging system for a vehicle having a thermal connecting device internal to the housing used to activate heat within the camera.

It is the object of the present invention to demonstrate a solution, how a camera of the initially mentioned kind can be more reliably operated in particular at cold temperatures.

According to the invention, this object is solved by a camera, by a driver assistance system, by a motor vehicle as well as by a method having the features according to the respective independent claims. Advantageous implementations of the invention are the subject matter of the dependent claims, of the description and of the figures.

A camera according to the invention for a motor vehicle includes a housing. Further, the camera includes at least one electronic component disposed in the housing and generating heat during the operation of the camera and transferring it to the housing. In addition, the camera includes a lens device retained on the housing. Moreover, the camera has a thermal connecting device retained on an exterior of the housing and adapted to provide a thermal connection between the housing and the lens device if an ambient temperature of the camera falls below a first threshold value.

The camera serves for arrangement on a motor vehicle. The camera includes at least one electronic component. The electronic component can for example be an electronic module. For example, the electronic component can be an image sensor, an image processing device or a part of a voltage supply of the camera. The electronic component can be disposed on a circuit board. During the operation of the camera, electrical energy is supplied to the electronic component. In the operation of the camera or of the electronic component, the electrical energy is partially converted to thermal energy or heat. The at least one electronic component is disposed within a housing of the camera such that the heat generated in the operation of the electronic component is transferred to the housing of the camera. Further, the camera has a lens device, which for example has a lens and a corresponding lens retainer. The lens can be retained on the housing of the camera by the lens retainer. The lens retainer can for example be attached to the housing or a through-opening of the housing by means of an adhesive connection. Usually, the lens retainer and/or the adhesive have a relatively low thermal conductivity such that the heat generated in the housing of the camera is not transferred to the lens.

The camera has a thermal connecting device retained on the exterior of the housing of the camera. This in particular means that the thermal connecting device is disposed on the exterior of the housing at least in certain areas. Now, if the ambient temperature of the camera or the ambient temperature of the motor vehicle falls below a first predetermined threshold value, a thermal connection between the housing and the lens device is provided by the thermal connecting device. In particular, a thermal connection between the exterior of the housing and the lens of the lens device is provided. Thus, the thermal energy, which is generated in the operation of the camera and by which the housing of the camera is also heated, can be transferred to the lens. Thereby, for example at cold ambient temperatures, in particular at temperatures below the freezing point, ice or snow can be prevented from attaching on the surface of the lens. Thus, reliable operation of the camera can be ensured.

Preferably, the thermal connecting device has an adjusting element formed of a bimetal. The adjusting element can for example be formed of two different materials, in particular two different metals, which are firmly bonded or form-fit connected to each other. Therein, the two materials, from which the adjusting element is formed, can have different thermal expansion coefficients. This in particular entails that the adjusting element automatically alters its shaping as a result of an alteration of the ambient temperature. For example, the adjusting element can correspondingly bend if the ambient temperature falls below the first threshold value. Such an adjusting element has the advantage that it can be simply and inexpensively manufactured. In addition, it is robust with respect to environmental impacts.

In an embodiment, the adjusting element alters its shaping depending on the ambient temperature such that the thermal connecting device provides the thermal connection between the housing and the lens device if the ambient temperature falls below the first threshold value and that the thermal connection between the housing and the lens device by means of the thermal connecting device is omitted if the ambient temperature exceeds the first threshold value. For example, the thermal connecting device or the adjusting element can be in a use position if the ambient temperature falls below the first threshold value. In this use position, the thermal connecting device establishes thermal contact between the housing and the lens device. In particular, here, the thermal connecting device can be thermally coupled both to the housing and to the lens device. If the ambient temperature exceeds the first threshold value, the adjusting element or the thermal connecting device can experience such a shape alteration that it is moved into a stowage position. In this stowage position, the adjusting element or the thermal connecting device cannot have thermal contact with the lens. The adjusting element can bend such that it is disposed spaced from the lens device. Thus, a thermal connecting device can be provided in simple and inexpensive manner, which does not require a separate control circuit. The thermal connecting device in particular alters its shaping depending on the ambient temperature.

In an embodiment, the adjusting element is formed beam-shaped and unilaterally retained on the exterior of the housing. In other words, the adjusting element is unilaterally clamped. This means that a first side of the beam-shaped adjusting element is retained on the exterior of the housing. The second, free end of the beam-shaped adjusting element can either provide a thermal contact with the lens device or be disposed spaced from the lens device. Alternatively thereto, it can be provided that the adjusting element is spirally formed. It can also be provided that a contact element is additionally disposed on a spiral adjusting element, which has thermal contact with the lens device or is disposed spaced from the lens device depending on the ambient temperature.

In a further embodiment, the thermal connecting device is adapted to provide a thermal connection between the housing and a heat sink of the motor vehicle if the ambient temperature of the camera exceeds a second threshold value. If the ambient temperature is sufficiently high such that the risk of icing of the lens does not exist, the thermal connecting device can further be used to dissipate heat from the camera or from the housing of the camera. If the ambient temperature exceeds a second predetermined threshold value, a thermal connection between the housing of the camera and a heat sink of the motor vehicle is provided. Such a heat sink can for example be a part of the motor vehicle, for example of the body, a support structure or the like. For example, the heat sink of the motor vehicle can be formed of a metal. Thus, with the aid of the thermal connecting device, it can additionally be achieved that the heat generated in the operation of the camera is dissipated from the camera and thus reliable operation of the camera can be allowed.

In an embodiment, the adjusting element is adapted to provide a thermal connection between the housing and the heat sink of the motor vehicle if the ambient temperature of the camera exceeds the second threshold value. This means that the adjusting element is formed such that it provides a thermal connection between the housing and the lens device if the ambient temperature falls below the first threshold value and that it provides a thermal connection between the housing and the heat sink if the ambient temperature exceeds the second threshold value. The adjusting element can be formed such that it thermally connects the housing and the lens device if the ambient temperature falls below the first threshold value and that it thermally connects the housing and the heat sink if the ambient temperature exceeds the first threshold value. In this case, the adjusting element or the thermal connecting device can move back and forth between two positions depending on the temperature. In the first position, it connects the housing to the lens device, and in the second position it connects the housing to the heat sink.

In a further configuration, the thermal connecting device has a further adjusting element, which is adapted to provide a thermal connection between the housing and the heat sink of the motor vehicle if the ambient temperature exceeds the second threshold value. In other words, the thermal connecting device can for example have two adjusting elements. The first adjusting element thermally connects the housing and the lens device if the ambient temperature falls below the first threshold value. The second adjusting element connects the housing and the heat sink of the motor vehicle if the ambient temperature exceeds the second threshold value. Thus, the heat generated by the at least one electronic component can be adequately transferred either to the lens device, in particular the lens, or to the heat sink.

In an embodiment, the thermal connecting device has a connecting element, which provides a permanent thermal connection between the housing and the lens device and the adjusting element is disposed on the heat sink. The connecting element can be formed of a metal. The connecting element can be mechanically connected with the housing and the lens device. In this case, the adjusting element is connected with the heat sink and can provide a thermal connection between the heat sink and the housing and/or the connecting element. Preferably, the adjusting element alters its shaping depending on the ambient temperature such that the adjusting element provides the thermal connection between the housing and the heat sink if the ambient temperature exceeds the second threshold value and that the thermal connection between the housing and the heat sink by means of the adjusting element is omitted if the ambient temperature falls below the first threshold value.

In an embodiment, the housing is at least partially formed of a metal. Preferably, the housing of the camera is completely formed of a metal, in particular aluminum. Thus, it can be achieved that the heat generated by the one electronic component is thus transferred to the housing of the camera. This heat can then be advantageously used at cold temperatures to heat the lens or to prevent icing of the lens. Furthermore, it is advantageous if the lens device has a lens and a lens retainer for retaining the lens on the housing, wherein the lens retainer has a lower thermal conductivity than the housing and the thermal connecting device. For example, the lens retainer can be fabricated of a corresponding plastic. In other words, the lens retainer presents a thermal barrier between the housing of the camera and the lens. By the thermal connecting device, it can accordingly be ensured that the heat is transferred from the housing of the camera to the lens.

Preferably, the camera comprises a motor vehicle mounting device for mounting the camera to the motor vehicle. By means of the motor vehicle mounting device, the camera can be mounted on or in the motor vehicle.

A driver assistance system according to the invention for a motor vehicle includes at least one camera according to the invention. The at least one camera in particular serves for providing image sequences or video data describing the environmental region of the motor vehicle. This video data can for example be provided on a display device of the motor vehicle. Thus, the at least one camera can serve for assisting the driver in reversing or parking. The at least one camera can also be a part of a so-called electronic rearview mirror.

A motor vehicle according to the invention includes a driver assistance system according to the invention. The motor vehicle is in particular formed as a passenger car.

A method according to the invention serves for operating a camera for a motor vehicle. Herein, during the operation of the camera, heat is generated by at least one electronic component disposed in a housing of the camera and transferred to the housing, wherein a lens device is retained on the housing. Further, by means of a thermal connecting device retained on an exterior of the housing, a thermal connection between the housing and the lens device is provided if an ambient temperature of the camera falls below a first threshold value.

The preferred embodiments presented with respect to the camera according to the invention and the advantages thereof correspondingly apply to the driver assistance system according to the invention, to the motor vehicle according to the invention as well as to the method according to the invention.

Further features of the invention are apparent from the claims, the figures and the description of figures. The features and feature combinations mentioned above in the description as well as the features and feature combinations mentioned below in the description of figures and/or shown in the figures alone are usable not only in the respectively specified combination, but also in other combinations or alone, without departing from the scope of the invention. Thus, implementations are also to be considered as encompassed and disclosed by the invention, which are not explicitly shown in the figures and explained, but arise from and can be generated by separated feature combinations from the explained implementations. Implementations and feature combinations are also to be considered as disclosed, which thus do not have all of the features of an originally formulated independent claim.

With the statements of "top", "bottom", "front", "rear", "horizontal", "vertical", depth direction", "width direction", "height direction" etc., the positions and orientations given with intended use and intended arrangement of the camera and with an observer then standing in front of the device and looking in the direction of the camera are specified.

Now, the invention is explained in more detail based on preferred embodiments as well as with reference to the attached drawings.

There show:
- Fig. 1: a motor vehicle according to an embodiment of the present invention, which has three cameras;
- Fig. 2: a camera having a thermal connecting device, which is in a first position; and
- Fig. 3: the camera according to Fig. 2, wherein the thermal connecting device is in a second position.

In the figures, identical and functionally identical elements are provided with the same reference characters.

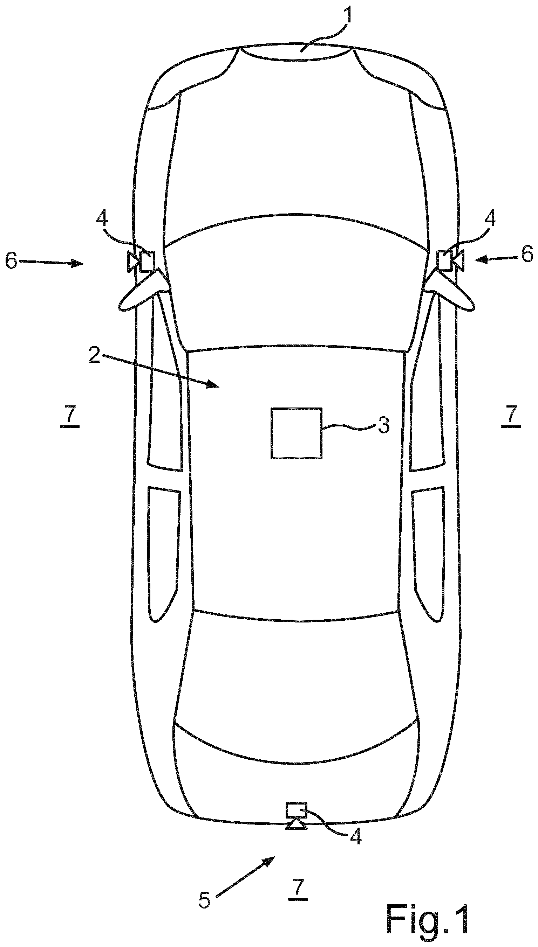

Fig. 1 shows a motor vehicle 1 according to an embodiment of the present invention in a plan view. In the present case, the motor vehicle 1 is formed as a passenger car. The motor vehicle 1 includes a driver assistance system 2. The driver assistance system 2 in turn includes a control device 3, which can for example be constituted by an electronic control unit of the motor vehicle 1. Moreover, the driver assistance system 2 includes at least one camera 4. In the present embodiment, the driver assistance system 2 includes three cameras 4, which are disposed distributed on the motor vehicle. Presently, one of the cameras 4 is disposed in a rear area 5 and the remaining two cameras 4 are disposed in a respective lateral area 6, in particular in an area of the wing mirrors. Presently, the number and the arrangement of the cameras 4 of the driver assistance system 2 are to be understood purely exemplarily.

By the cameras 4, an environmental region 7 of the motor vehicle 1 can be captured. Preferably, the three cameras 4 are formed identical in construction. In particular, an image sequence or video data can be provided by the cameras 4, which describes the environmental region 7. This video data can be transmitted from the cameras 4 to the control device 3. By means of the control device 3, a display device of the motor vehicle 1 not illustrated here can be controlled such that the video data of the cameras 4 can be displayed to the driver. Thus, the driver assistance system 2 serves for assisting the driver of the motor vehicle 1 in driving the motor vehicle 1. For example, the driver assistance system 2 can be a so-called electronic rearview mirror.

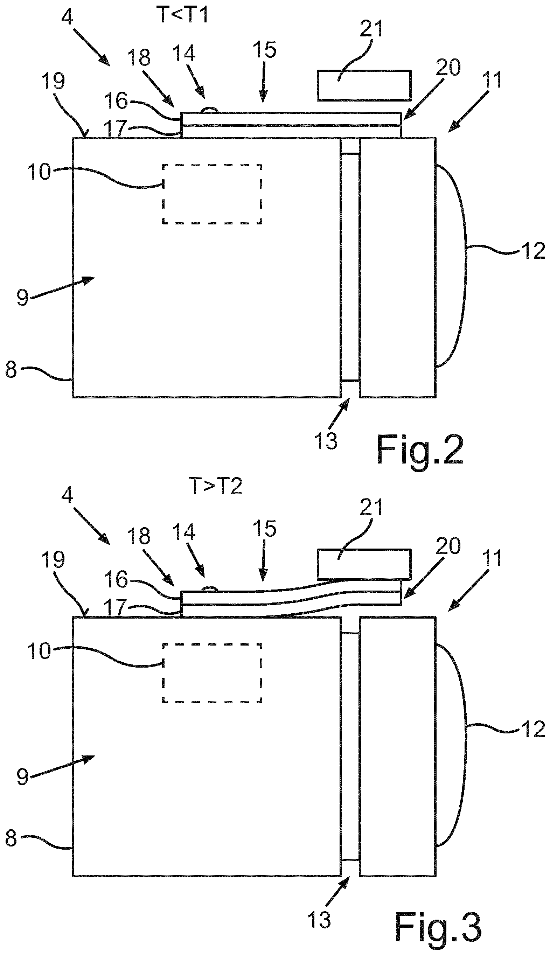

Fig. 2 shows a camera 4 in a side view. The camera 4 has a housing 8, which may be fabricated of a metal, in particular aluminum. Moreover, the camera 4 has at least one electronic component 10, which is disposed in an interior 9 of the housing 8. The electronic component 10, which is presently only schematically shown, can for example be an image sensor, an image processing device, a storage device or another electronic component. Further, the camera 4 includes a lens device 11. The lens device 11 in turn includes a lens 12 and a lens retainer 13, which serves for retaining the lens 12 on the housing 8.

During the operation of the camera 4, the at least one electronic component 10 is supplied with electrical energy. The electrical energy can for example be transferred from an on-board network of the motor vehicle 1 to the camera 4. In the operation of the electronic component 10, the electrical energy is partially converted to thermal energy. This entails that the interior 9 of the housing 8 heats and thus the housing 8 is also heated. The lens retainer 13 and/or a retaining element retaining the lens retainer 13 on the housing 8 are presently fabricated of a material, which has a low thermal conductivity. This entails that thermal energy is not transferred from the housing 8 to the lens 12. The camera 4 is disposed on the motor vehicle 1 such that it is exposed to environmental conditions. For example at low temperatures, in particular temperatures below the freezing point, this can result in the fact that the lens 12 of the camera 4 ices.

Further, the camera 4 includes a thermal connecting device 14. The thermal connecting device 14 includes an adjusting element 15 formed of a bimetal. The adjusting element 15 is formed of a first metal 16 and of a second metal 17, which have different thermal expansion coefficients. The adjusting element can for example be formed such that the first metal 16 has a lower thermal expansion coefficient compared to the second metal 17.

Presently, the adjusting element 15 is formed beam-shaped and connected to an exterior 19 of the housing 8 on a first side 18. On a second side 20 opposing the first side 18, the adjusting element 15 is free and movable, respectively. The adjusting element 15 can alter its shaping depending on the ambient temperature T of the camera 4.

The example of Fig. 2 shows the thermal connecting device 14 or the adjusting element at an ambient temperature T, which is below a first threshold value T1. Presently, the adjusting element 14 is in a use position, in which the adjusting element 15 or the thermal connecting device 14 thermally connects the housing 8 to the lens device 11. The first threshold value T1 for the ambient temperature T can for example be lower than 10 °C, for example 0 °C. Thus, at low ambient temperatures T, thermal coupling between the housing 8 and the lens device 11 can be achieved. Thus, the heat generated by the at least one electronic component 10 is transferred to the housing 8, from there to the thermal connecting device 14 and from it to the lens device 11. Thus, ice or snow can be prevented from depositing on the lens 12.

Fig. 3 shows the camera 4 according to Fig. 2, wherein the thermal connecting device 14 or the adjusting element 15 is in a second position. Presently, the ambient temperature T exceeds a second threshold value T2. This second threshold value T2 can for example be 40 °C. It can also be provided that the second thre shold value T2 corresponds to the first threshold value T1. If the ambient temperature T exceeds the second threshold value T2, the adjusting element 15 is deformed or bent such that the free end 20 has a contact with a heat sink 21 of the motor vehicle 1. Presently, the heat sink 21 is only exemplarily illustrated. The heat sink 21 can for example be a part of a body, of a support structure or the like of the motor vehicle 1. If the ambient temperature T exceeds the second threshold value T2, the adjusting element 15 or the thermal connecting device 14 does not have thermal contact with the lens device 11. Thus, it can be achieved that heat generated by the at least one electronic component 10 is transferred from the housing 8 to the heat sink 21.

## Claims

1. Camera (4) for a motor vehicle (1) including a housing (8), including at least one electronic component (10) disposed in the housing (8) and generating heat during operation of the camera (4) and transferring it to the housing (8), and including a lens device (11) retained on the housing (8),
**characterized in that**
the camera (4) has a thermal connecting device (14), which is retained on an exterior (19) of the housing (8) and which is adapted to provide a thermal connection between the housing (8) and the lens device (11) if an ambient temperature (T) of the camera (4) falls below a predetermined, first threshold value (T1) and
the thermal connecting device (14) is adapted to provide a thermal connection between the housing (8) and a heat sink (21) of the motor vehicle (1) if the ambient temperature (T) of the camera (4) exceeds a predetermined, second threshold value (T2).

2. Camera (4) according to claim 1,
**characterized in that**
the thermal connecting device (14) has an adjusting element (15), which is at least partially formed of a bimetal.

3. Camera (4) according to claim 2,
**characterized in that**
the adjusting element (15) alters its shaping depending on the ambient temperature (T) such that the thermal connecting device (14) provides the thermal connection between the housing (8) and the lens device (11) if the ambient temperature (T) falls below the first threshold value (T1), and that the thermal connection between the housing (8) and the lens device (11) by means of the thermal connecting device (14) is omitted if the ambient temperature (T) exceeds the first threshold value (T1).

4. Camera (4) according to any one of claims 2 or 3,
**characterized in that**
the adjusting element (15) is formed beam-shaped and a first side (18) of the adjusting element (15) is retained on the exterior (19) of the housing (8).

5. Camera (4) according to any one of the preceding claims,
**characterized in that**
the adjusting element (15) is adapted to provide a thermal connection between the housing (8) and the heat sink (21) if the ambient temperature (T) exceeds the second threshold value (T2).

6. Camera (4) according to any one of the preceding claims,
**characterized in that**
the thermal connecting device (14) has a further adjusting element, which is adapted to provide a thermal connection between the housing (8) and the heat sink (21) if the ambient temperature (T) exceeds the second threshold value (T2).

7. Camera (4) according to any one of the preceding claims,
**characterized in that**
the thermal connecting device (14) has a connecting element, which provides a permanent thermal connection between the housing (8) and the lens device (11) and the adjusting element (15) is disposed on the heat sink (21).

8. Camera (4) according to any one of the preceding claims,
**characterized in that**
the housing (8) is at least partially formed of a metal.

9. Camera (4) according to any one of the preceding claims,
**characterized in that**
the lens device (11) has a lens (12) and a lens retainer (13) for retaining the lens (12) on the housing (8), wherein the lens retainer (13) has a lower thermal conductivity than the housing (8) and the thermal connecting device (14).

10. Camera (4) according to any one of the preceding claims,
**characterized in that**
the camera (4) comprises a motor vehicle mounting device for mounting the camera (4) to the motor vehicle (1).

11. Driver assistance system (2) for a motor vehicle (1) with at least one camera (4) according to any one of the preceding claims.

12. Motor vehicle (1) with a driver assistance system (2) according to claim 11.

13. Method for operating a camera (4) for a motor vehicle (1), in which during operation of the camera (4) heat is generated by at least one electronic component (10) disposed in a housing (8) of the camera (4) and transferred to the housing (8), wherein a lens device (11) is retained on the housing (8),
**characterized in that**
by means of a thermal connecting device (14) of the camera (4) retained on an exterior (19) of the housing (8), a thermal connection between the housing (8) and the lens device (11) is provided if an ambient temperature (T) of the camera (4) falls below a first threshold value (T1) and
the thermal connecting device (14) is adapted to provide a thermal connection between the housing (8) and a heat sink (21) of the motor vehicle (1) if the ambient temperature (T) of the camera (4) exceeds a predetermined, second threshold value (T2).

## Patentansprüche

1. Kamera (4) für ein Kraftfahrzeug (1), ein Gehäuse (8) beinhaltend, das mindestens eine elektronische Komponente (10) beinhaltet, die in dem Gehäuse (8) angeordnet ist und während des Betriebes der Kamera (4) Wärme erzeugt und diese auf das Gehäuse (8) überträgt, und eine Linsenvorrichtung (11) beinhaltend, die in dem Gehäuse (8) gehalten wird,
**dadurch gekennzeichnet, dass**
die Kamera (4) eine Wärmeverbindungsvorrichtung (14) aufweist, die am Äußeren (19) des Gehäuses (8) gehalten wird und dafür eingerichtet ist, eine Wärmeverbindung zwischen dem Gehäuse (8) und der Linsenvorrichtung (11) bereitzustellen, wenn eine Umgebungstemperatur (T) der Kamera (4) unter einen festgelegten ersten Grenzwert (T1) fällt, und die Wärmeverbindungsvorrichtung (14) dafür eingerichtet ist, eine Wärmeverbindung zwischen dem Gehäuse (8) und einem Kühlkörper (21) des Kraftfahrzeugs (1) bereitzustellen, wenn die Umgebungstemperatur (T) der Kamera (4) einen festgelegten zweiten Grenzwert (T2) übersteigt.

2. Kamera (4) nach Anspruch 1,
**dadurch gekennzeichnet, dass**
die Wärmeverbindungsvorrichtung (14) ein Justierelement (15) aufweist, das zumindest teilweise aus einem Bimetall gebildet ist.

3. Kamera (4) nach Anspruch 2,
**dadurch gekennzeichnet, dass**
das Justierelement (15) seine Form abhängig von der Umgebungstemperatur (T) derart ändert, dass die Wärmeverbindungsvorrichtung (14) die Wärmeverbindung zwischen dem Gehäuse (8) und der Linsenvorrichtung (11) bereitstellt, wenn die Umgebungstemperatur (T) unter den ersten Grenzwert (T1) fällt, und dass die Wärmeverbindung zwischen dem Gehäuse (8) und der Linsenvorrichtung (11) mittels der Wärmeverbindungsvorrichtung (14) unterlassen wird, wenn die Umgebungstemperatur (T) den ersten Grenzwert (T1) übersteigt.

4. Kamera (4) nach einem der Ansprüche 2 oder 3,
**dadurch gekennzeichnet, dass**
das Justierelement (15) balkenförmig gebildet ist und eine erste Seite (18) des Justierelements (15) an dem Äußeren (19) des Gehäuses (8) gehalten wird.

5. Kamera (4) nach einem der vorhergehenden Ansprüche,
**dadurch gekennzeichnet, dass**
das Justierelement (15) dafür eingerichtet ist, eine Wärmeverbindung zwischen dem Gehäuse (8) und dem Kühlkörper (21) bereitzustellen, wenn die Umgebungstemperatur (T) den zweiten Grenzwert (T2) übersteigt.

6. Kamera (4) nach einem der vorhergehenden Ansprüche,
**dadurch gekennzeichnet, dass**
die Wärmeverbindungsvorrichtung (14) ein weiteres Justierelement aufweist, das dafür eingerichtet ist, eine Wärmeverbindung zwischen dem Gehäuse (8) und dem Kühlkörper (21) bereitzustellen, wenn die Umgebungstemperatur (T) den zweiten Grenzwert (T2) übersteigt.

7. Kamera (4) nach einem der vorhergehenden Ansprüche,
**dadurch gekennzeichnet, dass**
die Wärmeverbindungsvorrichtung (14) ein Verbindungselement aufweist, das eine dauerhafte Wärmeverbindung zwischen dem Gehäuse (8) und der Linsenvorrichtung (11) bereitstellt, und das Justierelement (15) an dem Kühlkörper (21) angeordnet ist.

8. Kamera (4) nach einem der vorhergehenden Ansprüche,
**dadurch gekennzeichnet, dass**
das Gehäuse (8) zumindest teilweise aus einem Metall gebildet ist.

9. Kamera (4) nach einem der vorhergehenden Ansprüche,
**dadurch gekennzeichnet, dass**
die Linsenvorrichtung (11) eine Linse (12) und einen Linsenhalter (13) zum Halten der Linse (12) an dem Gehäuse (8) aufweist, wobei der Linsenhalter (13) ein geringeres Wärmeleitvermögen aufweist als das Gehäuse (8) und die Wärmeverbindungsvorrichtung (14).

10. Kamera (4) nach einem der vorhergehenden Ansprüche,
**dadurch gekennzeichnet, dass**
die Kamera (4) eine Kraftfahrzeug-Montagevorrichtung zum Montieren der Kamera (4) an das Kraftfahrzeug (1) umfasst.

11. Fahrerassistenzsystem (2) für ein Kraftfahrzeug (1) mit mindestens einer Kamera (4) nach einem der vorhergehenden Ansprüche.

12. Kraftfahrzeug (1) mit einem Fahrerassistenzsystem (2) nach Anspruch 11.

13. Verfahren zum Betreiben einer Kamera (4) für ein Kraftfahrzeug (1), wobei während des Betriebes der Kamera (4) durch mindestens eine elektronische Komponente (10), die in einem Gehäuse (8) der Kamera (4) angeordnet ist, Wärme erzeugt und diese auf das Gehäuse (8) übertragen wird, wobei in dem Gehäuse (8) eine Linsenvorrichtung (11) gehalten wird,
**dadurch gekennzeichnet, dass**
mittels einer Wärmeverbindungsvorrichtung (14) der Kamera (4), die am Äußeren (19) des Gehäuses (8) gehalten wird, eine Wärmeverbindung zwischen dem Gehäuse (8) und der Linsenvorrichtung (11) bereitgestellt wird, wenn eine Umgebungstemperatur (T) der Kamera (4) unter einen festgelegten ersten Grenzwert (T1) fällt, und
die Wärmeverbindungsvorrichtung (14) dafür eingerichtet wird, eine Wärmeverbindung zwischen dem Gehäuse (8) und einem Kühlkörper (21) des Kraftfahrzeugs (1) bereitzustellen, wenn die Umgebungstemperatur (T) der Kamera (4) einen festgelegten zweiten Grenzwert (T2) übersteigt.

## Revendications

1. Caméra (4) pour un véhicule à moteur (1) comprenant un boîtier (8), comprenant au moins un composant électronique (10) disposé dans le boîtier (8) et qui génère de la chaleur pendant le fonctionnement de la caméra (4) et qui transfère celle-ci au boîtier (8), et comprenant un dispositif de lentille (11) retenu sur le boîtier (8), **caractérisé en ce que**:
la caméra (4) comprend un dispositif de connexion thermique (14), qui est retenu sur un côté extérieur (19) du boîtier (8) et qui est adapté pour établir une connexion thermique entre le boîtier (8) et le dispositif de lentille (11) si une température ambiante (T) de la caméra (4) tombe en dessous d'une première valeur de seuil prédéterminée (T1), et
le dispositif de connexion thermique (14) est adapté pour établir une connexion thermique entre le boîtier (8) et un dissipateur de chaleur (21) du véhicule à moteur (1) si la température ambiante (T) de la caméra (4) dépasse une seconde valeur de seuil prédéterminée (T2).

2. Caméra (4) selon la revendication 1, **caractérisé en ce que** le dispositif de connexion thermique (14) comprend un élément de réglage (15), qui est au moins partiellement constitué d'un bimétal.

3. Caméra (4) selon la revendication 2, **caractérisé en ce que** l'élément de réglage (15) change de forme en fonction de la température ambiante (T) de telle sorte que le dispositif de connexion thermique (14) établisse la connexion thermique entre le boîtier (8) et le dispositif de lentille (11) si la température ambiante (T) tombe en dessous de la première valeur de seuil (T1), et **en ce que** la connexion thermique entre le boîtier (8) et le dispositif de lentille (11) au moyen du dispositif de connexion thermique (14) n'est pas établie si la température ambiante (T) dépasse la première valeur de seuil (T1).

4. Caméra (4) selon l'une quelconque des revendications 2 ou 3, **caractérisé en ce que** l'élément de réglage (15) est en forme de poutre et un premier côté (18) de l'élément de réglage (15) est retenu sur le côté extérieur (19) du boîtier (8).

5. Caméra (4) selon l'une quelconque des revendications précédentes, **caractérisé en ce que** l'élément de réglage (15) est adapté pour établir une connexion thermique entre le boîtier (8) et le dissipateur de chaleur (21) si la température ambiante (T) dépasse la seconde valeur de seuil (T2).

6. Caméra (4) selon l'une quelconque des revendications précédentes, **caractérisé en ce que** le dispositif de connexion thermique (14) comprend un élément de réglage supplémentaire, qui est adapté pour établir une connexion thermique entre le boîtier (8) et le dissipateur de chaleur (21) si la température ambiante (T) dépasse la seconde valeur de seuil (T2).

7. Caméra (4) selon l'une quelconque des revendications précédentes, **caractérisé en ce que** le dispositif de connexion thermique (14) comprend un élément de connexion, qui établit une connexion thermique permanente entre le boîtier (8) et le dispositif de lentille (11), et l'élément de réglage (15) est disposé sur le dissipateur de chaleur (21).

8. Caméra (4) selon l'une quelconque des revendications précédentes, **caractérisé en ce que** le boîtier (8) est au moins partiellement constitué d'un métal.

9. Caméra (4) selon l'une quelconque des revendications précédentes, **caractérisé en ce que** le dispositif de lentille (11) comprend une lentille (12) et un dispositif de retenue de lentille (13) pour retenir la lentille (12) sur le boîtier (8), dans lequel le dispositif de retenue de lentille (13) présente une conductivité thermique inférieure à celle du boîtier (8) et du dispositif de connexion thermique (14).

10. Caméra (4) selon l'une quelconque des revendications précédentes, **caractérisé en ce que** la caméra (4) comprend un dispositif de montage sur véhicule à moteur pour monter la caméra (4) sur le véhicule à moteur (1).

11. Système d'assistance au conducteur (2) pour un véhicule à moteur (1) comprenant au moins une caméra (4) selon l'une quelconque des revendications précédentes.

12. Véhicule à moteur (1) comprenant un système d'assistance au conducteur (2) selon la revendication 11.

13. Procédé de fonctionnement d'une caméra (4) pour un véhicule à moteur (1), dans lequel, pendant le fonctionnement de la caméra (4), de la chaleur est générée par au moins un composant électronique (10) disposé dans un boîtier (8) de la caméra (4) et est transférée au boîtier (8), dans lequel un dispositif de lentille (11) est retenu sur le boîtier (8), **caractérisé en ce que**:
au moyen d'un dispositif de connexion thermique (14) de la caméra (4) retenu sur un côté extérieur (19) du boîtier (8), une connexion thermique entre le boîtier (8) et le dispositif de lentille (11) est établie si une température ambiante (T) de la caméra (4) tombe en dessous d'une première valeur de seuil (T1), et
le dispositif de connexion thermique (14) est adapté pour établir une connexion thermique entre le boîtier (8) et un dissipateur de chaleur (21) du véhicule à moteur (1) si la température ambiante (T) de la caméra (4) dépasse une seconde valeur de seuil prédéterminée (T2).
